(19) **Europäisches Patentamt**

**European Patent Office**

**Office européen des brevets**

(11) Veröffentlichungsnummer: **0 006 095**
**A1**

(12) # EUROPÄISCHE PATENTANMELDUNG

(21) Anmeldenummer: 78100819.8

(51) Int. Cl.³: **F 16 C 33/10, F 16 C 17/10**

(22) Anmeldetag: 04.09.78

(30) Priorität: 20.06.78 EP 78100196

(43) Veröffentlichungstag der Anmeldung: 09.01.80
Patentblatt 80/1

(84) Benannte Vertragsstaaten: **CH DE**

(71) Anmelder: **Mlotla, Dusan, Dr.Ing., Morgenweg 8, CH-8404 Winterthur (CH)**

(72) Erfinder: **Mlotla, Dusan, Dr.Ing., Morgenweg 8, CH-8404 Winterthur (CH)**

(54) **Gleitlager mit Zwangsumlauf eines Schmiermittels.**

(57)     Bei einem Gleitlager mit Zwangsumlauf eines Schmiermittels zwischen Gleitflächen (8a, 8b) an einem Innenring (4) und an einem stehenden, den Innenring (4) umschließenden und führenden Außenring (2a, 2b) ist in dem Innenring (4) ein Sammelraum (5) für das Schmiermittel vorgesehen. Aus diesem führt ein Druckkanalsystem (6) in den Raum zwischen den Gleitflächen. Andererseits ist ein von Flanken des Innenringes (4) zu dem Sammelraum (5) führendes Saugkanalsystem (7) vorhanden.

Die beiden Systeme sind so ausgelegt, daß bei rotierendem Innenring (4) unter Wirkung der Zentrifugalkraft und einem Druckunterschied in dem Raum zwischen den Gleitflächen und an den Flanken des Innenringes (4), wo der Saugkanal (7) angeschlossen ist, das Schmiermittel aus dem Sammelraum (5) durch das Druckkanalsystem (6) zwischen die Gleitflächen (8a, 8b) getrieben ist und nach einem Durchlauf zwischen den Gleitflächen (8a, 8b) durch das Saugkanalsystem (7) in den Sammelraum (5) zurückgesaugt wird.

- 1 -

Gleitlager mit Zwangsumlauf eines Schmiermittels

Die Erfindung betrifft ein Gleitlager mit Zwangsumlauf eines Schmiermittels zum Bilden eines Schmierfilmes zwischen zueinander orientierten Gleitflächen, welche an einem Innenring und einem stehenden, den Innenring umschliessenden und führenden Aussenring ausgebildet sind, wobei zwischen dem Innenring und dem Aussenring ein Zwischenraum freigelassen ist.

Die herkömmlichen hydrodynamischen Gleitlager weisen eine relativ kleine Tragfähigkeit auf, insbesondere bei kleinen und mittleren Umfangsgeschwindigkeiten, sie garantieren nicht die volle Ausfüllung des Lagerspaltes zwischen den Gleitflächen mit dem Schmiermittel und ihre Dämpfungs- und Stabilitätseigenschaften sind bescheiden.- Die bisherigen hydrostatischen Gleitlager sind verhältnismässig aufwendig und müssen an eine ausserhalb des Lagers angebrachte Schmierpumpe mit Antrieb und Zubehör angeschlossen sein.

Die Erfindung hat zum Ziel die Schaffung eines Lagers, bei welchem die Tragfähigkeit erhöht, die Reib- und Antriebsverluste vermindert und die Dämpfungs- und Stabilitätseigenschaften verbessert werden, wobei an eine ausserhalb des Lagers stehende Schmierpumpe mit Antrieb und weiterem Zubehör verzichtet werden soll.

Diese Aufgabe ist erfindungsgemäss dadurch erfüllt, dass in dem Innenring ein Sammelraum vorgesehen ist, welcher einerseits mittels eines Druckkanalsystems an den Raum zwischen den zu schmierenden Gleitflächen an Auslassstellen angeschlossen ist und andererseits mittels eines von Saugstellen an den Flanken des Innenringes im Bereich eines mit dem Schmiermittel gefüllten Zwischenraumteiles zu dem Sammelraum führenden Saugkanalsystems angeschlossen ist, wobei die beiden Systeme so ausgelegt sind, dass bei rotierendem Innenring unter Wirkung der Zentrifugalkraft und einem Druckunterschied zwischen den Auslassstellen und den Saugstellen das Schmiermittel aus dem Sammelraum durch das Druckkanalsystem zwischen die Gleitflächen getrieben wird und nach einem Durchlauf zwischen den Gleitflächen aus dem Zwischenraumteil in den Sammelraum zurückgesaugt wird.

Die dadurch erzielten Vorteile sind die Erhöhung der Tragkraft des Lagers infolgedessen, dass die Gleitflächen am ganzen Umfang mit unter Druck stehendem Schmiermittel bei der Rotation versorgt werden, weiter eine vollkommene Füllung des Raumes zwischen den Gleitflächen mit dem Schmiermittel, ferner die Verminderung der Reib- und Antriebsleistung und die Verbesserung der Dämpfungs- und Stabilitätseigenschaften des Lagers, wobei an eine ausserhalb des Lagers stehende Schmierpumpe mit Antrieb und Zubehör verzichtet wurde.

Die Erfindung wird nachstehend anhand der in der Zeichnung dargestellten Ausführungsbeispiele näher beschrieben und erläutert.

In der Zeichnung zeigt:
Fig. 1 ein erstes Ausführungsbeispiel im Längsschnitt
Fig. 2 einen Schnitt gemäss Linie II - II in Fig. 1
Fig. 3 ein zweites Ausführungsbeispiel im Längsschnitt
Fig. 4 einen Schnitt gemäss Linie IV - IV in Fig. 3

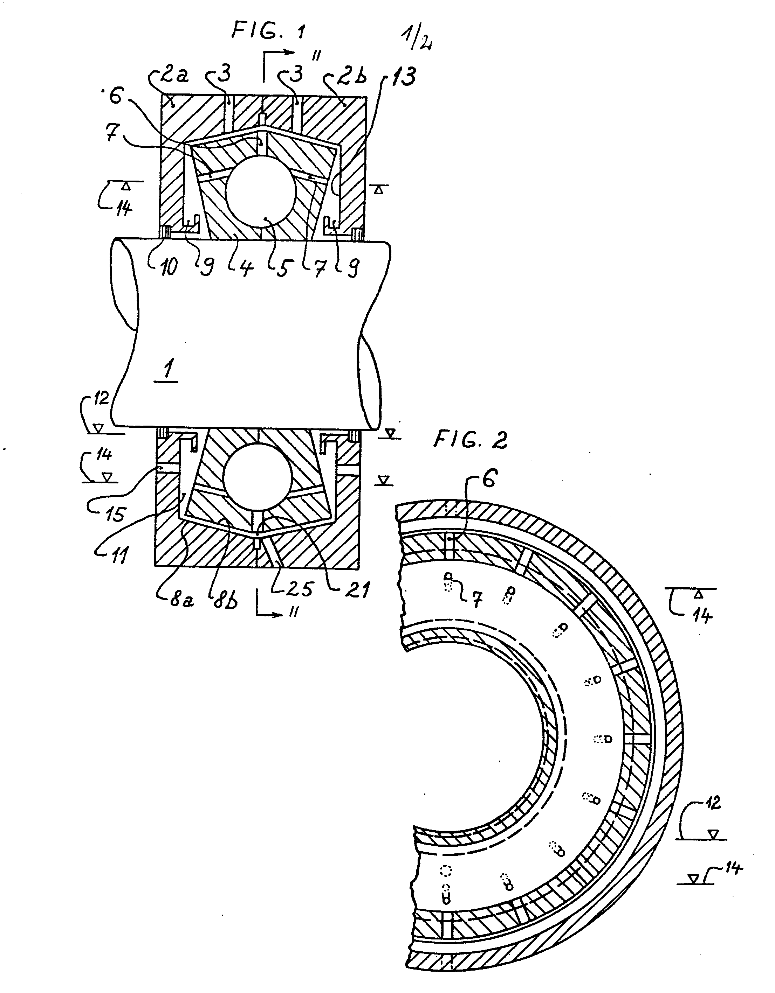

In der Fig. 1 und 2 ist ein Lager für waagrechte Wellen dargestellt. Das Lager besteht aus zwei Hauptteilen: einem Aussenring, der aus zwei Hälften zusammengesetzt ist und zwar einem linken Teil 2a und einem rechten Teil 2b. Beide Teile sind mit einer Sammelnute 9 versehen. Der zweite Hauptteil ist der Innenring 4, der auf der Welle 1 fest sitzt und über einen Sammelraum 5 und mehrere Druckkanäle 6 sowie Saugkanäle 7 verfügt. Die Druckkanäle bilden das Druckkanalsystem, die Saugkanäle das Saugkanalsystem. Die Dichtung 10 verhindert ein eventuelles Abfliessen des Schmiermittels ausserhalb des Lagers. Sie ist keinerlei Drücken ausgesetzt.

Im Stillstand ist ein Teil des Innenringes, d.h. ein Teil des Sammelraumes 5, der Druckkanäle 6 und der Saugkanäle 7 sowie ein Teil des Zwischenraumes 11 zwischen dem Aussenring und Innenring mit dem Schmiermittel gefüllt. Infolge der Schwerkraft sammelt sich das ganze im Lager vorhandene Schmiermittel im untersten Teil des stehenden Lagers. Das Niveau des Schmiermittels im Stillstand ist in Fig. 1 und 2 als 12 bezeichnet. Beginnt sich die Maschinenwelle 1 mit dem Innenring 4 zu drehen, wirken die Druckkanäle des Innenringes 6 wie eine Zentrifugenpumpe und fördern das Schmiermittel zwischen die Gleitflächen 8a und 8b, welche dadurch an den Auslassstellen 21 am ganzen Umfang mit unter Druck stehendem Schmiermittel versorgt werden, d.h. auf die Gleitflächen wird ein hydrostatischer Druck ausgeübt. Dieser hydrostatische Druck ist an den Auslassstellen der Gleitflächen am grössten und an den Rändern am kleinsten. Somit bewirkt er einen zur Drehebene senkrechten Schmiermittelfluss. Diesem am ganzen Umfang wirkenden hydrostatischen Druck wird ein hydrodynamischer überlagert. Wie aus der Fig. 1 ersichtlich, fliesst der hydrostatisch bedingte Fluss von der Mitte der Gleitflächen, d.h. von den Auslassstellen 21 beidseitig zu den Aussenrändern, wo er die Gleitflächen verlässt und an den Innenflächen des stehenden Aussenringes 13 abgebremst wird. Im weiteren wird das Schmiermittel an den Innenflächen des Aussenringes der Sammelnute 9 zugeführt und infolge der Schwerkraft fliesst es weiter zum unteren Teil des Zwischenraumes 11, wo es mittels der Saugkanäle 7 in den Sammelraum des Innenringes 5 zurückgesaugt wird. Anschliessend wird es von den Druckkanälen 6 erfasst und wieder den Gleitflächen an den Auslassstellen unter Druck zugeführt. Das bei Rotation sich einstellende Niveau im Sammelraum 5 ist in Fig. 1 als 14 bezeichnet.

Nachdem die Gleitflächen am ganzen Umfang mit unter Druck stehendem Schmiermittel versorgt werden, wird die Tragfähigkeit des Lagers erhöht und das Lager weist bessere Dämpfungs- und Stabilitätseigenschaften auf.

Für den Fall, dass die Reibwärme, die die Temperatur des Schmiermittels erhöht, nicht über den Aussen- und Innenring an die Umgebung abgeführt werden kann, sind an einer oder mehreren geeigneten Stellen des Aussenringes Bohrungen 3 für die Abfuhr des Schmiermittels zum Kühler vorgesehen. Nach der Abkühlung des Schmiermittels im Kühler wird das Schmiermittel über weitere Bohrungen 15, die in den drucklosen Zwischenraum 11 führen, zurückgeleitet. An den Stellen der Gleitflächen, wo die Bohrungen 3 zur Abfuhr des Schmiermittels angebracht sind, herrscht ein Überdruck, an Stellen, wo die Bohrungen 15 in den Zwischenraum zurückführen, gibt es dagegen keinen Überdruck; dies macht eine Umlaufpumpe für das Schmiermittel überflüssig. Das Schmiermittel wird infolge des Druckunterschiedes automatisch durch den Kühler zirkulieren. Die Durchflussmenge durch den Kühler kann mit einem einfachen Drosselventil reguliert werden. Ein Wechsel des Schmiermittels ist mit der Bohrung 25, die an der untersten Stelle des Lagers angebracht ist und den Bohrungen 15 oder 3, durchzuführen.

In der Fig. 1 sind die Gleitflächen beidseitig schräg angeordnet worden. Diese Ausführungsart sichert dem Lager eine radiale und eine axiale Kräfteaufnahme.

Eine andere Ausführungsart ist ein Lager mit geraden Gleitflächen, welches eine rein radiale Kräfteaufnahme sichert.

Eine weitere Ausführungsart hat kugelförmig gewölbte Gleitflächen, die nebst einer radialen und axialen Kräfteaufnah-

- 5 - 0006095

me auch eine Verstellung der Wellenachse ermöglicht.

Denkbar sind ausserdem weitere Ausführungsarten, die auf dem beschriebenen Prinzip basieren, so z.B. mit umgekehrt schräg angeordneten Gleitflächen als in der Fig. 1 gezeichnet ist.

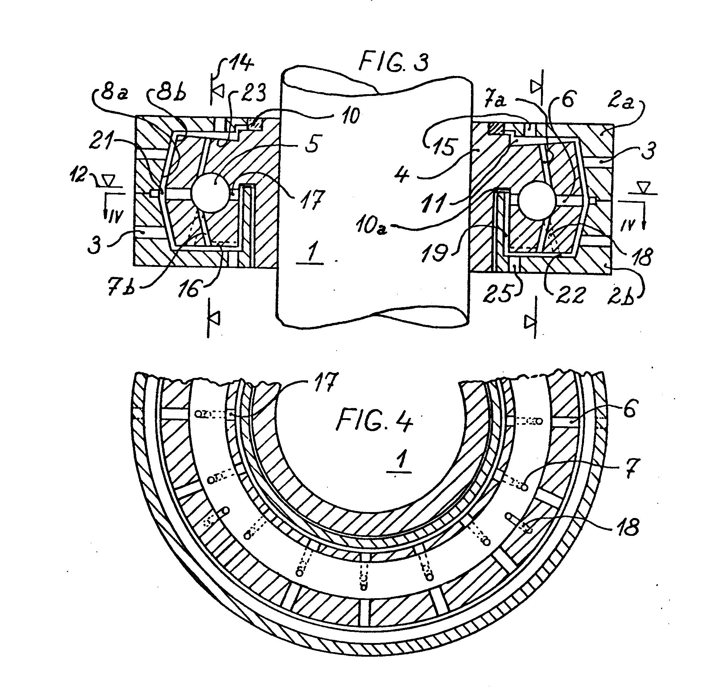

Die Fig. 3 und 4 zeigt ein Lager für senkrechte Wellen. Das Lager besteht, ähnlich wie das bereits beschriebene Lager mit waagrechter Achse, aus einem zweiteiligen Aussenring 2a und 2b, ferner einem Innenring 4 mit Sammelraum 5, Druckkanälen 6, Saugkanälen 7a und 7b, Radialkanälen 16, Verbindungskanälen 17 und eventuell auch Zusatzkanälen 18. Als letzte Teile sind die Dichtungen 10 und 10a zu erwähnen. Beide Teile des Aussenringes 2a und 2b sind mit einer Verschraubung, Verschweissung, Verlötung oder anders fest verbunden. Der Innenring weist ausserdem einen Ausschnitt 19 auf.

Im Stillstand ist der Sammelraum 5, die Druckkanäle 6, die unteren Saugkanäle 7b, die Verbindungskanäle 17, die Radialkanäle 16, eventuell auch die Zusatzkanäle 18 sowie der radial auswärts stehende Teil des Ausschnittes 19 mit dem Schmiermittel gefüllt. Das für den Stillstand typische Niveau des Schmiermittels ist in Fig. 3 als 12 eingezeichnet.- Beginnt sich die Maschinenwelle mit dem Innenring zu drehen, wird das Schmiermittel infolge der Zentrifugalkräfte von den Verbindungskanälen 17, ferner von den Radialkanälen 16 und den unteren Saugkanälen 7b aus dem Ausschnitt 19 in den Sammelraum 5 gepumpt. Das Schmiermittel wird weiter vom Sammelraum 5 mittels der Druckkanäle 6 zwischen die Gleitflächen 8a und 8b weitergepumpt. Auf diese Art werden die Gleitflächen an den Auslassstellen 21 dauernd mit unter Druck stehendem Schmiermittel versorgt und es wird ein hydrostatischer Schmiermitteldruck erzeugt. Diesem hydrostatischen Druck wird ein hydrodynamischer an den Gleitflächen überlagert. Der hydrostatische Druck an den Auslassstellen 21 ist am grössten und an beiden Rändern der Gleitflächen geringer, infolgedessen verursacht er einen zur Ro-

0006095

tationsebene senkrechten Schmiermittelfluss. Zur Unterstützung der axialen Tragkraft des Lagers ist die untere Fläche des Innenringes so ausgebildet wie es in Fig. 3 zu sehen ist, damit sie einen zusätzlichen tragenden hydrostatischen Schmierfilm entstehen lassen kann. Diese zusätzlichen Gleitflächen 22 können eventuell mit einigen weiteren Kanälen, die als Zusatzkanäle bezeichnet sind, mit unter Druck stehendem Schmiermittel versorgt werden. Die obere Fläche des Innenringes 23 ist leicht abgeschrägt, damit das aus den Gleitflächen ausströmende Schmiermittel sich in diesem Zwischenraum 11 sammeln und von den oberen Saugkanälen 7a in den Sammelraum 5 wieder gepumpt werden kann. Die obere Fläche des Innenringes kann im Bedarfsfall gleich ausgebildet sein wie die untere Fläche. Das bei Rotation sich einstellende Niveau des Schmiermittels ist in Fig. 3 als 14 eingezeichnet.

Für die eventuell benötigte Kühlung des Schmiermittels sind die Bohrungen 3 und 15 gedacht, die ähnlich funktionieren wie bei dem bereits beschriebenen Lager mit waagrechter Achse. Ein Wechsel des Schmiermittels ist mit der Bohrung bzw. Bohrungen 25 und 3 oder 15 möglich.

In Fig. 3 sind die Gleitflächen beidseitig schräg angeordnet worden. Dieses Ausführungsbeispiel sichert dem Lager vor allem eine radiale und teilweise auch eine axiale Kräfteaufnahme. Zur Verstärkung der axialen Kräfteaufnahme in einer Richtung wurden im Ausführungsbeispiel gemäss Fig. 3 noch sogenannte zusätzliche Gleitflächen 22 geschaffen.

Nebst diesem Ausführungsbeispiel sind mehrere Variationen der auf dem beschriebenen Prinzip basierenden Ausführungsarten möglich.

Eine der weiteren Ausführungsarten wurde bereits erwähnt und zwar die mit einer zusätzlichen Gleitfläche unten und oben am Innenring. Für eine rein radiale Kräfteaufnahme ist ein Ausführungsbeispiel mit gerader (senkrechter) Gleitfläche gedacht. Statt der beidseitig schräg angeordneten Gleitflächen, wie sie in Fig. 3 gezeichnet sind, kann auch eine kugelförmig gewölbte angebracht werden, die eine Verstellung der Wellenachse ermöglicht.

Ein weiteres Ausführungsbeispiel ist ein Lager mit nur einer schräg angeordneten Lagerfläche. Dieses Ausführungsbeispiel ist für eine einseitige axiale Kräfteaufnahme besonders günstig.

Nebst den hier beschriebenen Ausführungsbeispielen sind noch weitere denkbar, so z.B. eines ohne jede zusätzliche Gleitfläche.

Verwendung von Schmiermitteln:

Für die nach Fig. 1 bis 4 beschriebenen Lager mit allen denkbaren Variationen sind alle herkömmlichen flüssigen Schmiermittel anwendbar. Nachdem der Schmierfilm durch Kombination einer hydrostatischen und hydrodynamischen Wirkung zustande kommt, ist es nicht unbedingt notwendig die Haftung des Schmiermittels auf den Gleitflächen mit allen möglichen Mitteln, so z.B. mit Additiven zu sichern, es können auch Schmiermittel ohne Additive verwendet werden.

Der hydrostatisch bewirkte Schmierfilm und ein dauernder Schmiermittelfluss quer zur Drehebene bei den hier beschriebenen Lagern ermöglichen die Verwendung von unkonventionellen Schmiermitteln. Besonders geeignete Schmiermittel für die beschriebenen Lager sind alle Flüssigkeiten, die eine grössere Dichte aufweisen. Je grösser die Dichte des Schmierfilmes, umso grösser der hydrostatische Druck auf die Gleitflächen. Als Beispiel eines unkonventionellen Schmiermittels für die beschriebenen Lager sei Quecksilber genannt.

Die in Fig. 1 bis 4 beschriebenen Ausführungsbeispiele machen ausserdem den gleichzeitigen Einsatz von zwei oder mehreren Schmiermitteln, die chemisch miteinander nicht reagieren und unterschiedliche Dichte aufweisen, möglich und hauptsächlich vorteilhaft. Die beiden (oder sogar mehrere) Schmiermittel werden gemäss ihrer Dichte zwischen den Gleitflächen zwei (oder mehr) ringförmige Schichten bilden und zwar das dichtere eine Schicht am grösseren Durchmesser, d.h. näher der Gleitfläche des Aussenringes 8a und das weniger dichte am kleineren Durchmesser, d.h. näher der Gleitfläche des Innenringes 8b, siehe Fig. 1 und 3. Die beiden Schmiermittelschichten werden nicht nur unterschiedliche Durchmesser, sondern auch verschiedene mittlere Umfangsgeschwindigkeiten aufweisen. Dies führt zu einer besonders kleinen Reibung im Lager.

Die Gleitlager nach Ausführungsbeispielen, die in Fig. 1 bis 4 beschrieben wurden sowie ähnliche Ausführungsbeispiele, machen also den Einsatz von einem oder auch gleichzeitig mehreren Schmiermitteln unterschiedlicher Dichte möglich. Als Beispiel sei der gleichzeitige Einsatz von Quecksilber und einem mit Quecksilber chemisch nicht reagierenden Öl in einem Lager genannt.

- 1 -                              0006095

Patentansprüche:

1. Gleitlager mit Zwangsumlauf eines Schmiermittels zum
Bilden eines Schmierfilmes zwischen zueinander orientierten Gleitflächen, welche an einem Innenring (8b) und
einem stehenden, den Innenring umschliessenden und führenden Aussenring (8a) ausgebildet sind, wobei zwischen
dem rotierenden Innenring (4) und dem stehenden Aussenring (2a und 2b) ein Zwischenraum (11) freigelassen ist
dadurch gekennzeichnet, dass in dem Innenring ein Sammelraum (5) vorgesehen ist, welcher einerseits mittels
eines Druckkanalsystems (6) an den Raum zwischen den zu
schmierenden Gleitflächen an Auslassstellen (21) angeschlossen ist und andererseits mittels eines von Saugstellen an Flanken des Innenringes im Bereich eines mit
dem Schmiermittel gefüllten Zwischenraumteiles zu dem
Sammelraum (5) führenden Saugkanalsystems (7) angeschlossen ist, wobei die beiden Systeme so ausgelegt
sind, dass bei rotierendem Innenring unter Wirkung der
Zentrifugalkraft und einem Druckunterschied zwischen
den Auslassstellen und den Saugstellen das Schmiermittel aus dem Sammelraum durch das Druckkanalsystem zwischen die Gleitflächen getrieben wird und nach einem
Durchlauf zwischen den Gleitflächen aus dem Zwischenraumteil in den Sammelraum zurückgesaugt wird.

2. Gleitlager nach Anspruch 1
dadurch gekennzeichnet, dass der Sammelraum (5) ein zur
Rotationsachse des Innenringes rotationssymetrischer
Ringraum ist und dass die Gleitflächen (8a, 8b) am Umfang des Innenringes und komplementär dazu an anliegender Wand des Aussenringes radial auswärts gewölbt sind,
wobei das Druckkanalsystem radial auswärts aus dem Sammelraum in den Gipfel der Wölbung der Gleitflächen führende Druckkanäle (6) aufweist und wobei das Saugkanalsystem Saugkanäle (7) aufweist, welche von den Flanken
des Innenringes zu der Rotationsachse geneigt und radial auswärts zum Sammelraum steigend in diesen führen.

0006095

3. Gleitlager nach Anspruch 1
dadurch gekennzeichnet, dass die Gleitflächen des Innen- und Aussenringes (8a und 8b) zylindrisch parallel zur Rotationsachse angeordnet sind.

4. Gleitlager nach Anspruch 1
dadurch gekennzeichnet, dass die Gleitflächen des Innen- und Aussenringes (8a, 8b) von der Mitte beidseitig kegelförmig zur Rotationsebene angeordnet sind.

5. Gleitlager nach Anspruch 1,
welches zur Aufnahme einer axialen und radialen Belastung bei einer senkrecht im Raum angeordneten zu lagernden Welle bestimmt ist, dadurch gekennzeichnet, dass die im Raum untere Flanke des Innenringes und die dieser anliegende Wand des Aussenringes mindestens teilweise zu Gleitflächen (22) ausgebildet sind und dass der im Raum untere Teil des Zwischenraumes (11) mittels einer Dichtung (10a) im Ausschnitt (19) im Innenring gegen das Auslaufen des Schmiermittels gesichert ist.

6. Gleitlager nach Anspruch 1
dadurch gekennzeichnet, dass bei rotierendem Innenring (4) an den Gleitflächen des Aussenringes (8a) eine Schicht eines Materials gebildet ist, welches Material die dichtere Komponente eines mindestens zwei Komponenten aufweisenden Schmiermittels ist.

7. Gleitlager nach Anspruch 1
dadurch gekennzeichnet, dass der Aussenring (2a und 2b) senkrecht zur Rotationsachse stehende radial auswärts führende Bohrungen (3) aufweist, welche das unter Druck stehende Schmiermittel zum Kühler abführen und nach einer Abkühlung durch Bohrungen (15) in den Zwischenraum zurückführen.

0006095

FIG. 1

FIG. 2

FIG. 3

FIG. 4

1

Europäisches
Patentamt

**EUROPÄISCHER RECHERCHENBERICHT**

0006095
Nummer der Anmeldung

EP 78 100 819.8

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 435 261 (W. SIEGER) <br> * Anspruch; Fig. 1 * <br><br> -- | 1,3, <br> 5 | F 16 C 33/10 <br> F 16 C 17/10 |
| | DE - C - 713 779 (SVENSKA KULLAGER- <br> FABRIKEN) <br> * Seite 2, Zeilen 27 bis 57; <br> Fig. 1 * <br><br> -- | 1,3, <br> 5 | |
| | DE - C - 701 763 (SVENSKA KULLAGER- <br> FABRIKEN) <br> * Fig. 2 und 4 * <br><br> -- | 1,3 | RECHERCHIERTE SACHGEBIETE (Int. Cl.²) <br><br> F 16 C 17/00 <br> F 16 C 33/00 |
| | DE - C - 650 518 (SVENSKA KULLAGER- <br> FABRIKEN) <br> * Fig. 1 und 2 * <br><br> -- | 1,2, <br> 3 | |
| | FR - A - 815 573 (NOMY) <br> * Fig. 1 bis 3 * <br><br> -- | 1,3, <br> 5 | KATEGORIE DER GENANNTEN DOKUMENTE |
| | US - A - 2 148 144 (NOMY) <br> * Fig. 1 bis 17 * <br><br> -- | 1,3, <br> 5 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| | US - A - 2 053 201 (SVENSKA KULLA- <br> GERFABRIKEN) <br> * Fig. 1 bis 3 * <br> ---- | 1,3 | E: kollidierende Anmeldung <br> D: in der Anmeldung angeführtes Dokument <br> L: aus andern Gründen angeführtes Dokument |
| X | Der vorliegende Recherchenbericht wurde für alle Patentansprüche erstellt. | | &.: Mitglied der gleichen Patent- familie, übereinstimmendes Dokument |
| Recherchenort <br> Berlin | Abschlußdatum der Recherche <br> 13-03-1979 | Prüfer <br> MASSALSKI | |

EPA form 1503.1   06.78